# EUROPÄISCHE PATENTSCHRIFT

(11) **EP 3 172 069 B1**
(45) Veröffentlichungstag und Bekanntmachung des Hinweises auf die Patenterteilung: **19.09.2018**
(21) Anmeldenummer: 15738270.6
(22) Anmeldetag: 08.07.2015
(51) Int. Cl.: B60G 7/00, B60G 17/015, B62D 7/14, B62D 9/04, B62D 17/00

(54) **VORRICHTUNG ZUM VERSTELLEN VON STURZ UND/ODER SPUR DER RÄDER VON KRAFTFAHRZEUGEN**
DEVICE FOR ADJUSTING CAMBER AND/OR TOE OF A VEHICLE WHEEL
DISPOSITIF POUR RÉGLER LE CARROSSAGE ET/OU PARALLÉLISME D'UN ROUE D'UN VÉHICULE

(30) Priorität: 26.07.2014 DE 102014011191
(43) Veröffentlichungstag der Anmeldung: 31.05.2017
(73) Patentinhaber: Audi AG, 85045 Ingolstadt (DE)
(72) Erfinder: SCHMID, Wolfgang, 85354 Freising (DE); KLINGER, Thomas, 85057 Ingolstadt (DE); GLAS, Achim, 85080 Gaimersheim (DE)
(74) Vertreter: Reichert, Thomas Klaus
(86) Internationale Anmeldenummer: PCT/EP2015/001392
(87) Internationale Veröffentlichungsnummer: WO 2016/015818

(56) Entgegenhaltungen:
- WO-A1-98/16418
- WO-A1-2005/047030
- WO-A1-2010/034370
- DE-A1-102009 006 903
- DE-A1-102009 021 093

## Beschreibung

Die Erfindung betrifft eine Vorrichtung zum Verstellen von Sturz und/oder Spur eines Kraftfahrzeugrads nach dem Oberbegriff des Patentanspruches 1.

Bei einer Kurvenfahrt erzeugen die auf das Fahrzeugrad wirkenden Seitenkräfte ein sehr hohes, auf den Radträger wirkendes Kippmoment. Von daher ist es erforderlich, speziell das im Radträger integrierte Radlager in der Sturzrichtung sehr steif zu gestalten.

Aus der WO 2010 034 370 A1 ist eine gattungsgemäßer Stand der Technik bekannt, bei dem ein Lagerverbund, bestehend aus den rad- und achsseitigen Drehteilen, zwischen einem radseitigen Trägerteil (das heißt Bremssattelträger) und einem achsseitigen Führungsteil axial eingespannt ist. Das achsseitige Führungsteil trägt einen Elektromotor zum Drehantrieb des achsseitigen Drehteils. Zudem sind Lenker einer Radaufhängung am achsseitigen Führungsteil anlenkbar. Das radseitige Trägerteil dient zur drehbaren Lagerung des Fahrzeugrads und trägt einen Bremssattel, der mit der Bremsscheibe des Fahrzeugrads zusammenwirkt.

In der WO 2010 034 370 A1 sind die Drehteile zueinander sowie mit Bezug auf das Trägerteil und das Führungsteil drehbar gelagert. Außerdem ist im radseitigen Trägerteil ein Radlager für das Fahrzeugrad integriert, wodurch sich insgesamt vier Lagerstellen ergeben, die in einem Radkraftfluss in Reihe geschaltet sind. Eine solche Serienschaltung von vier Lagerstellen geht einher mit einer Reduzierung der Sturzsteifigkeit der Anordnung. Entsprechend sind die Lagerstellen in der Sturzrichtung durch geeignete Maßnahmen (zum Beispiel Erhöhung des Lagerdurchmessers, etc.) sehr steif auszulegen. Dies führt jedoch zu einem erhöhten Bauraumbedarf sowie einem erhöhten Bauteilgewicht.

Aus der WO 1998/016418 A1 ist ein weiterer Stand der Technik bekannt, bei dem eine standardisierte Bremsanlage, wie sie in gängigen Achskonzepten eingebaut wird, nicht umsetzbar ist. In der WO-Schrift ist ein Fahrzeugrad drehbar in einem Radlager eines Radträgers gelagert. Der Radträger ist zweiteilig mit zueinander verstellbaren radseitigen und achsseitigen Drehteilen ausgeführt. Diese wirken mit einander zugewandten schräggestellten Zylinderflächen zusammen, die zur Drehachse des achsseitigen Drehteils geneigte Drehachse des radseitigen Drehteils definieren. Die Spur/SturzVerstellung wird dadurch bewirkt, dass die Drehteile gleichsinnig oder gegensinnig verdreht werden, wodurch sich das Fahrzeugrad um entsprechende Winkelgrade im Spur- und Sturzwinkel verschwenkt. Das radseitige Drehteil des Radträgers bildet zudem ein radial äußeres Lagergehäuse des Radlagers, in dem ein Radnabenabschnitt eines, das Fahrzeugrad tragenden Radflansches drehbar gelagert ist. Wie oben erwähnt, ist in einem solchen Achskonzept eine standardisierte Bremsanlage, bestehend aus einem am Radträger montierten Bremssattel, der mit einer am Fahrzeugrad montierten Bremsscheibe in Eingriff bringbar ist, nicht umsetzbar. Der Grund dafür besteht darin, dass bei einer solchen Bremsanlage die Bremsscheibe auf der mitschwenkenden Radnabe zu arretieren ist und der Bremssattel auf dem Radträger arretiert sein muss, um die Bremsmomente übertragen zu können. Hierfür ist jedoch in der obigen WO-Schrift keinerlei Tragstruktur vorgesehen, an der der Bremssattel montierbar ist.

Die Aufgabe der Erfindung besteht darin, eine Vorrichtung bereitzustellen, die sowohl fertigungstechnisch einfach als auch gegenüber auftretenden Radkräften ausreichend bauteilsteif realisierbar ist.

Die Aufgabe ist durch die Merkmale des Patentanspruches 1 gelöst. Bevorzugte Weiterbildungen der Erfindung sind in den Unteransprüchen offenbart.

Die Erfindung beruht auf der Problematik, dass im Stand der Technik gemäß WO 2010 034 370 A1 bei einer Bremsung oder einer Kurvenfahrt im Radkraftfluss vom Fahrzeugrad zum Fahrzeugaufbau insgesamt vier Lagerstellen des Radträgers liegen, wodurch diese vier Lagerstellen entsprechend robust auszulegen sind. Vor diesem Hintergrund ist das radseitige Trägerteil (das heißt der Bremssattelträger) über ein Drehlager auf dem radseitigen Drehteil abgestützt.

Erfindungsgemäß ist daher das Radlager nicht mehr (wie in WO 2010 034 370 A1 offenbart) unmittelbar am radseitigen Trägerteil montiert. Das radseitige Trägerteil trägt also nicht mehr unmittelbar das Radlager, sondern nur noch den Bremssattel und gegebenenfalls den Antriebsmotor für das radseitige Drehteil. Dadurch wird die Lagerstelle zwischen dem radseitigen Drehteil und dem radseitigen Trägerteil (das heißt der Bremssattelträger) aus dem Radkraftfluss genommen und daher kräftemäßig entlastet. Dies führt dazu, dass nur noch drei Lagerstellen in Serie im Radkraftfluss geschaltet sind. Die vierte Lagerstelle, das heißt das Drehlager zwischen dem radseitigen Trägerteil und dem radseitigen Drehteil kann dagegen kleiner ausgelegt sein, da die auf das Drehlager einwirkenden Kräfte und Momente von zum Beispiel der Bremsanlage sehr viel geringer ausfallen. Weiterhin erhöht sich durch den Wegfall der vierten Lagerstelle aus dem Radkraftfluß die Sturzsteifigkeit des Lagerverbundes, wodurch die verbleibenden Lagerstellen bei gleichbleibender Sturzsteifigkeit wieder kleiner ausgeführt werden können. In Summe reduziert sich - im Vergleich zum Stand der Technik - der Bauraumbedarf sowie das Bauteilgewicht der Vorrichtung beträchtlich.

Bevorzugt kann das radseitige Trägerteil radial außerhalb des radseitigen Drehteils angeordnet sein, wodurch die Vorrichtung in Axialrichtung besonders kompakt gestaltet werden kann. In diesem Fall kann das Trägerteil über eine radial innere Lagermantelfläche unter Zwischenschaltung des Drehlagers auf einer radial äußeren Lagermantelfläche des radseitigen Drehteils abgestützt sein.

Das achsseitige Drehteil und das radseitige Drehteil kann jeweils mit einem Antriebsmotor trieblich verbunden sein. Bevorzugt können die Drehteile jeweils Bestandteile eines Zahnradtriebs sein, bei dem der Elektromotor über eine Zahnradstufe das achsseitige und/oder radseitige Drehteil antreibt. Bei gleichsinnigen oder gegensinnigen Verdrehung der Drehteile erfolgt eine Verschwenkung des Trägerteils um einen vorgegebenen Spur- und/oder Sturzwinkel. Eine besonders bauraumsparende Anordnung ergibt sich, wenn das radseitige Drehteil einen Zahnradabschnitt aufweist, der Bestandteil des oben erwähnten Zahnradtriebs ist und in Axialrichtung betrachtet zwischen der Trägerteil-Abstützstelle und der Schrägfläche des radseitigen Drehteils angeordnet ist.

In einer optionalen Weiterbildung der Erfindung kann das radseitige Drehteil in Doppelfunktion gleichzeitig auch das äußere Lagergehäuse des Radlagers bilden. Radial innerhalb des, das äußere Lagergehäuse bildenden Drehteils kann ein dazu korrespondierender Radnabenabschnitt drehbar gelagert sein, der in Querrichtung nach außen in einen, das Fahrzeugrad tragenden Radflansch übergeht. Die Lageraußenbahnen des Radlagers können unmittelbar am Innenumfang des radseitigen Drehteils eingearbeitet sein. Für einen einfacheren Kundendienst kann es jedoch bevorzugt sein, ein demontierbares Radlager zu verwenden, dessen Lageraußenbahnen nicht unmittelbar am Innenumfang des radseitigen Drehteils eingearbeitet sind.

Um eine fertigungstechnisch einfache Einbindung der Vorrichtung in einer herkömmlichen Radaufhängung zu ermöglichen, kann der Radträger ein achsseitiges Führungsteil aufweisen. Am achsseitigen Führungsteil können die Lenker, die Stabilisator-Koppelstellen und/oder Dämpfer/Federn der Radaufhängung des Fahrzeugs angelenkt sein. Zudem kann das Führungsteil bewegungsentkoppelt, das heißt über ein Drehlager, auf dem achsseitigen Drehteil abgestützt sein. Das Führungsteil kann, ähnlich wie das radseitige Trägerteil, radial außerhalb des achsseitigen Drehteils angeordnet sein. In diesem Fall kann das Führungsteil über eine radial innere Lagermantelfläche unter Zwischenlage des Drehlagers auf einer radial äußeren Lagermantelfläche des achsseitigen Drehteils abgestützt sein.

Bevorzugt kann zwischen dem Trägerteil und dem Führungsteil ein Drehmomentübertragungselement positioniert sein, und zwar zur Bildung eines Momentenpfads, bei dem ein Drehmoment, insbesondere ein Bremsmoment, vom Trägerteil zum Führungsteil übertragen wird, und die achs- und radseitigen Drehteile überbrückt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Prinzipdarstellung einer aus dem Stand der Technik bekannten Vorrichtung zum Verstellen von Spur- und Sturzwinkel eines Kraftfahrzeugrades;
- Fig. 2: in einer Ansicht entsprechend der Fig. 1 die Vorrichtung mit darin realisierter Erfindung; und
- Fig. 3: in einem Halbschnitt die obere Hälfte der Vorrichtung in einer gegenständlichen Ausführung der erfindungsgemäßen Vorrichtung.

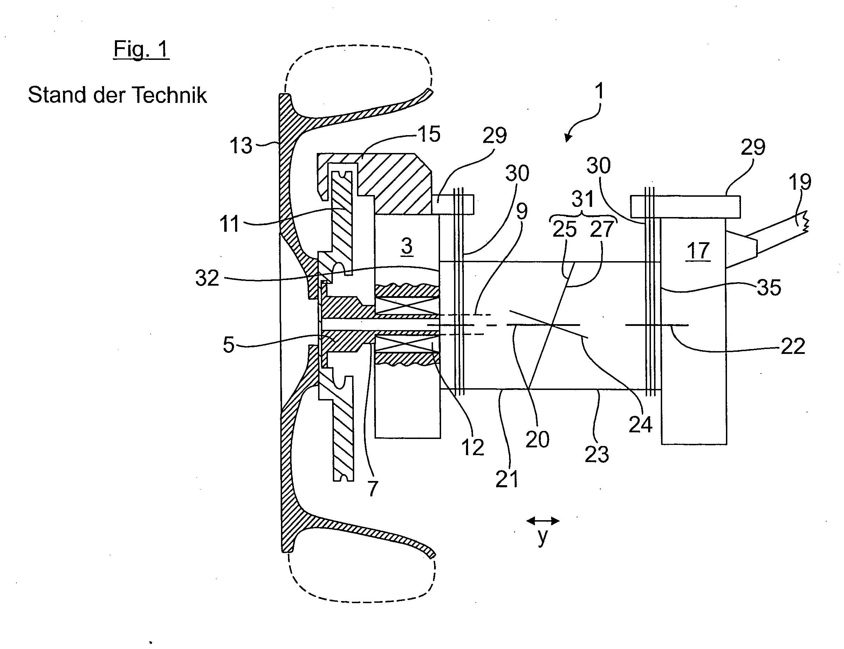

In der Fig. 1 ist zum einfacheren Verständnis der Erfindung eine grob schematische Darstellung eines nicht von der Erfindung umfassten, aus dem Stand der Technik bekannten Radträgers 1 eines Fahrzeugrads 13 gezeigt.

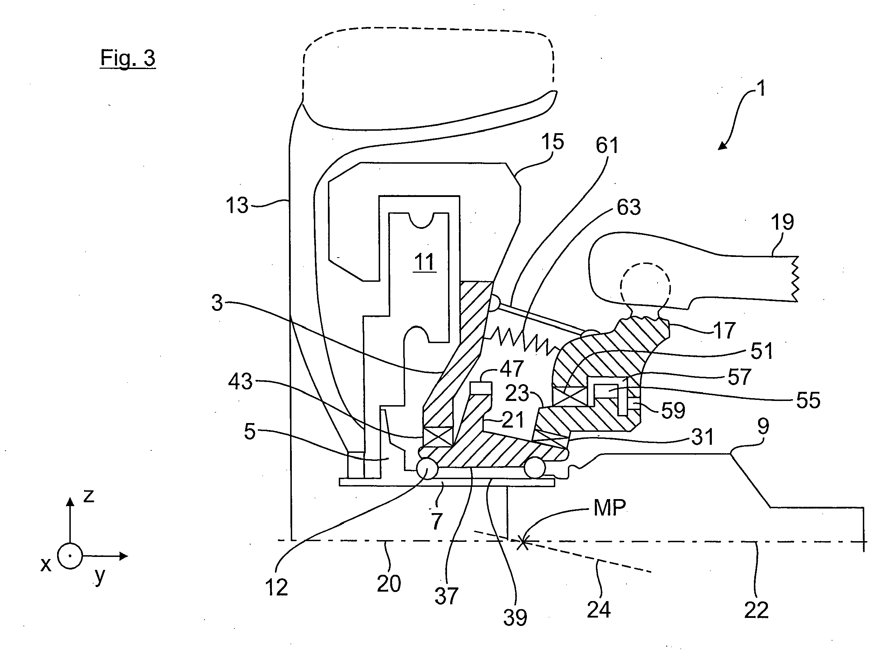

Der Radträger 1 weist ein Trägerteil 3 auf, in dem ein Radflansch 5 mit seinem Nabenabschnitt 7 drehbar in einem Radlager 12 gelagert ist. Am Radflansch 5 ist eine Bremsscheibe 11 sowie ein Fahrzeugrad 13 mit seiner Felge montiert. Die Bremsscheibe 11 ist zusammen mit einem am Trägerteil 3 montierten Bremssattel 15 Bestandteil einer Bremsanlage. Durch den Radträger 1 hindurch ist eine, das Fahrzeugrad 13 antreibende Gelenkwelle geführt, an deren Gleichlaufgelenk (nur in der Fig. 3 mit Bezugsziffer 9 gezeigt) eine ebenfalls nicht dargestellte Zentralschraube eingeschraubt ist, mit der über die Radnabe 5 und das Gleichlaufgelenk 9 das Radlager 12 verspannt wird.

Ferner weist der Radträger 1 ein achsseitiges Führungsteil 17 auf, an dem in der Fig. 1 beispielhaft ein Lenker 19 der Radaufhängung angelenkt ist. Zwischen dem Trägerteil 3 und dem Führungsteil 17 sind als Stellelemente zwei Drehteile 21, 23 vorgesehen. Das Drehteil 21 ist unter Bildung einer Drehteil-Achse 20 an einer Lagerstelle 32 drehbar mit dem Trägerteil 3 verbunden. Das Drehteil 23 ist unter Bildung der Drehachse 22 an einer Lagerstelle 35 mit dem Führungsteil 17 verbunden. In der Fig. 1 sind die beiden Drehteile 21, 23 über eine gemeinsame Lagerstelle 31, das heißt über plane Schrägflächen 25, 27, zueinander in Gleit- und/oder Wälzlagerung und über eine Drehachse 24 verdrehbar miteinander verbunden. Die Drehachse 24 ist in der Fig. 1 senkrecht zu den Schrägflächen 25, 27 sowie in einem definierten Winkel zur Drehachse 22 des achsseitigen Drehteils 23 geneigt ausgerichtet.

In der Fig. 1 ist beispielhaft die Drehteil-Achse 20 und 22 lageidentisch mit der Radachse. In Abkehr davon kann jedoch das Drehteil 21 nicht koaxial zur Radachse angeordnet sein, sondern können die Drehteil-Achse 20 und die Radachse zueinander schräggestellt sein.

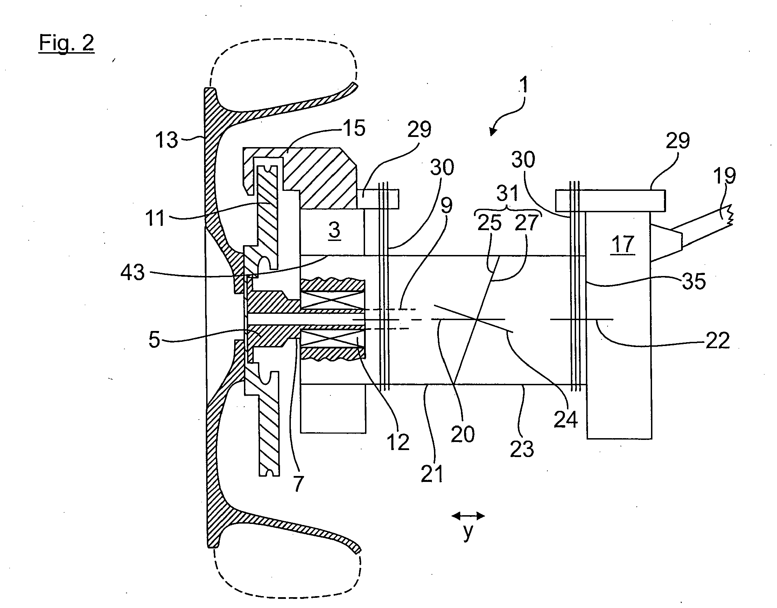

Sowohl am Trägerteil 3 als auch am Führungsteil 17 ist in der Fig. 1 jeweils ein elektrischer Stellmotor 29 vorgesehen, der mit den Drehteilen 21, 23 über Zahnradtriebe 30 trieblich verbunden ist. Mittels der Stellmotoren 29 können die beiden Drehteile 21, 23 gleichsinnig oder gegensinnig in beide Drehrichtungen verdreht werden, wodurch das Trägerteil 3 relativ zum Führungsteil 17 eine Schwenkbewegung oder Taumelbewegung um einen Momentanpol MP (Fig. 2 bis 5) ausführt und so den Spurwinkel und/oder den Sturzwinkel des Fahrzeugrads 13 entsprechend verändert.

In der Fig. 1 ist also zwischen dem radseitigen Trägerteil 3 und dem radseitigen Drehteil 21 die Lagerstelle 32 gebildet, zwischen den beiden Drehteilen 21, 23 die gemeinsame Lagerstelle 31, bestehend aus den beiden Schrägflächen 25, 27, sowie zwischen dem achsseitigen Drehteil 23 und dem Führungsteil 17 eine weitere Lagerstelle 35 gebildet. Das Radlager 12 ist in der Fig. 1 unmittelbar im radseitigen Trägerteil 3 montiert. Bei einer Bremsung oder einer Kurvenfahrt liegen im Radkraftfluss vom Fahrzeugrad 13 zum Fahrzeugaufbau insgesamt die vier, entsprechend robust auszulegenden Lagerstellen 12, 32, 31, 35. Diese sind im Radkraftfluss in Reihe geschaltet. Eine solche Serienschaltung der vier Lagerstellen 12, 32, 31, 35 geht einher mit einer Reduzierung der Sturzsteifigkeit der Anordnung. Entsprechend sind die Lagerstellen 12, 32, 31, 35 in der Sturzrichtung durch geeignete Maßnahmen (zum Beispiel Erhöhung des Lagerdurchmessers, etc.) sehr steif auszulegen. Dies führt jedoch zu einem erhöhten Bauraumbedarf sowie einem erhöhten Bauteilgewicht.

In der Fig. 2 ist ein erfindungsgemäßer Radträger 1 gezeigt, bei dem im Gegensatz zur später beschriebenen Fig. 3 die als Drehmomentbrücke wirkende Koppelstange nicht ersichtlich ist. Im Unterschied zur Fig. 1 ist in der Fig. 2 das Radlager 12 nicht mehr unmittelbar am radseitigen Trägerteil 3 montiert, sondern vielmehr unmittelbar innerhalb des radseitigen Drehteils 21. Das Trägerteil 3 ist am Außenumfang des radseitigen Drehteils 21 über eine Lagerstelle 43 abgestützt. In der Fig. 2 trägt also das radseitige Trägerteil 3 nicht mehr unmittelbar das Radlager 12, sondern nur noch den Bremssattel 15 und den Antriebsmotor 29 für das radseitige Drehteil 21. Dadurch wird die Lagerstelle 43 zwischen dem radseitigen Drehteil 21 und dem radseitigen Trägerteil 3 aus dem Radkraftfluss genommen und daher kräftemäßig entlastet. Dies führt dazu, dass nur noch die drei Lagerstellen 12, 31 und 35 in Serie im Radkraftfluss geschaltet sind, wie es später anhand der Fig. 3 nochmals ausführlicher beschreiben wird.

In der Fig. 3 ist eine beispielhafte technische Realisierung der in der Fig. 2 dargestellten Vorrichtung gezeigt. Im Unterschied zur Fig. 1 oder 2 sind die beiden Drehteile 21, 23 nicht mehr über plane Schrägflächen 25, 27 in Anlage, um die schräggestellte Drehachse 24 zu definieren, sondern an einer gemeinsamen Drehlagerstelle 31. Diese kann beispielhaft als ein Wälz- und Gleitlager oder auch aus Kombinationen aus mehreren dieser Lager realisiert sein, die im Wesentlichen alle Translations -und Rotationsrichtungen festhalten, und zwar bis auf die Drehachse. Diese Verallgemeinerung gilt auch für die sonstigen, in den Figuren beschriebenen Lagerstellen.

Zudem ist in der Fig. 3 das Radlager 12 nicht mehr unmittelbar im radseitigen Trägerteil 3 integriert, sondern vielmehr unmittelbar innerhalb des radseitigen Drehteils 21. In der Fig. 3 sind die Lageraußenbahnen und die Lagerinnenbahnen des Radlagers 12 rein exemplarisch unmittelbar im Innenumfang 37 des radseitigen Drehteils 21 sowie unmittelbar im Außenumfang 39 des Nabenabschnittes 7 des Radflansches 5 eingearbeitet. Entsprechend dient in der Fig. 2 das radseitige Drehteil 21 in Doppelfunktion auch als ein äußeres Lagergehäuse des Radlagers 12. Am Außenumfang des radseitigen Drehteils 21 ist in Fahrzeugquerrichtung y außen das Trägerteil 3 über eine Lagerstelle 43 radial außen auf dem radseitigen Drehteil 21 abgestützt. Die Lagerstelle 43 muß so ausgelegt sein, dass Kippmomente aufgenommen werden können.

In Abkehr von der Fig. 3 kann in einer alternativen technischen Umsetzung das Radlager 12 demontierbar ausgeführt sein, und zwar mit einem radial äußeren Lagergehäuse, das demontierbar, das heißt zum Beispiel im Presssitz und/oder durch Verschraubung, am Innenumfang des Drehteils 21 montiert ist, und/oder mit einem radial inneren Lagergehäuse, das am Außenumfang der Radnabe 5 montierbar ist.

Wie aus der Fig. 3 weiter hervorgeht, sind die Lagerstelle 43 sowie die gemeinsame Drehlagerstelle 31 rein exemplarisch an axial gegenüberliegenden Seiten des Drehteils 21 ausgebildet, wobei dazwischen ein Zahnradabschnitt 47 positioniert ist, der Bestandteil des Zahnradtriebs 30 (Fig. 1) ist.

Das achsseitige Führungsteil 17 ist - analog zum Trägerteil 3 - an einem Drehlager 51 radial außen auf dem achsseitigen Drehteil 23 abgestützt. Im weiteren Verlauf in der Fahrzeugquerrichtung y nach innen ist am Außenumfang des achsseitigen Drehteils 23 beispielhaft ein weiterer Zahnradabschnitt 55 angeformt, der ebenfalls Bestandteil des Zahnradtriebs 30 ist. Der Zahnradabschnitt 55 des achsseitigen Drehteils 23 ist in einem Ringraum 57 positioniert, der in der Fahrzeugquerrichtung y nach außen durch das Drehlager 51 begrenzt ist und nach innen durch eine Ringdichtung 59 begrenzt ist, die zwischen dem Führungsteil 17 und dem achsseitigen Drehteil 23 angeordnet ist. Die Ringdichtung 59 ist neben der beweglichen Dichtung 63 (das heißt Gummim- oder Kunststoffanschette) lediglich beispielhaft dargestellt. Selbstverständlich können darüber hinaus an allen anderen Lagerstellen ebenfalls Dichtungen angebracht sein.

Erfindungsgemäß trägt das radseitige Trägerteil 3 - neben zum Beispiel einer elektronischen Parkbremse - nur noch den Bremssattel 15, den Antriebsmotor 29 für das radseitige Drehteil 21 sowie die später beschriebene Drehmomentabstützung 61, jedoch nicht mehr das Radlager 12. Dadurch wird speziell das zwischen dem Trägerteil 3 und dem radseitigen Drehteil 21 angeordnete Drehlager 43 aus dem Radkraftfluss genommen. Dies führt dazu, dass bezogen auf die auftretenden Radkräfte nur noch drei Lagerstellen in Serie geschaltet sind, und zwar das Radlager 12, das Drehlager 31 sowie das Stützlager 51, nicht jedoch die Lagerstelle 43, an der das Trägerteil 3 auf dem radseitigen Drehteil 21 abgestützt ist. Von daher kann die auf dem radseitigen Drehteil 21 sitzende Lagerstelle 43 wesentlich kleiner ausgelegt sein, da die dort einwirkenden Radkräfte und -momente sehr viel geringer ausfallen. Durch Wegfall der Lagerstelle 43 aus dem Radkraftfluss erhöht sich zudem die Sturzsteifigkeit des Lagerverbundes, wodurch die verbleibenden Lager, das heißt das Radlager 12, das Drehlager 31 sowie das Stützlager 51, bei - im Vergleich zum Stand der Technik - gleichbleibender Sturzsteifigkeit kleiner ausgelegt werden können.

Zwischen dem Trägerteil 3 und dem Führungsteil 17 ist in der Fig. 2 eine Koppelstange 61 montiert. Diese wirkt als ein Drehmomentübertragungselement, über das ein Drehmoment, insbesondere ein Bremsmoment, vom Trägerteil 3 zum Führungsteil 17 übertragbar ist. Die Koppelstange 61 ist radial außerhalb einer umlaufenden Manschette 63 angeordnet, die die Drehteile 21, 23 und deren Lagerstellen schmutzdicht abdichtet.

## Patentansprüche

1. Vorrichtung zum Verstellen von Sturz und/oder Spur eines Fahrzeugrads (13) eines Kraftfahrzeugs, mit einem Radträger (1), an dem das Fahrzeugrad (13) drehbar in einem Radlager (12) gelagert ist und ein radseitiges Trägerteil (3), ein achsseitiges Führungsteil (17) sowie dazwischen angeordnete rad- und achsseitige Drehteile (21, 23) aufweist, die an einer gemeinsamen Lagerstelle (31) um eine Drehachse (24) zueinander verdrehbar abgestützt sind, um die das radseitige Drehteil (21) zur Spur- oder Sturzverstellung des Fahrzeugrads (13) um einen Taumelpunkt (MP) verschwenkbar ist, wobei das radseitige Trägerteil (3) einen mit einer Bremsscheibe (11) des Fahrzeugrads (13) zusammenwirkenden Bremssattel (15) trägt, **dadurch gekennzeichnet, dass** das radseitige Trägerteil (3) über ein Drehlager (43) auf dem radseitigen Drehteil (21) abgestützt ist.

2. Vorrichtung nach Anspruch 1, **dadurch gekennzeichnet, dass** das Radlager (12) demontierbar ausgeführt ist, und zwar mit einem radial inneren Lagergehäuse und einem radial äußeren Lagergehäuse, das demontierbar, das heißt zum Beispiel im Presssitz und/oder durch Verschraubung, an einem Außenumfang der Radnabe (5) bzw. an einem Innenumfang des Drehteils (21) montiert ist, oder dass das radseitige Drehteil (21) unmittelbar das radial äußere Lagergehäuse des Radlagers (12) bildet, und dass radial innerhalb des, das äußere Lagergehäuse bildende Drehteils (21) ein Radnabenabschnitt (7) eines, das Fahrzeugrad (13) tragenden Radflansches (5) drehbar gelagert ist.2.

3. Vorrichtung nach Anspruch 1 oder 2, **dadurch gekennzeichnet, dass** das Radlager (12) im radseitigen Drehteil (21) integriert ist.

4. Vorrichtung nach Anspruch 1, 2 oder 3, **dadurch gekennzeichnet, dass** im Radlager (12) des Radträgers (1) ein Radnabenabschnitt (7) eines, das Fahrzeugrad (13) tragenden Radflansches (5) drehbar gelagert ist.

5. Vorrichtung nach einem der vorhergehenden Ansprüche, **dadurch gekennzeichnet, dass** das Trägerteil (3) radial außerhalb des radseitigen Drehteils (21) angeordnet ist, und dass insbesondere das Trägerteil (3) über ein radial inneres Drehlager (43) auf dem radseitigen Drehteils (21) abgestützt ist.

6. Vorrichtung nach einem der vorhergehenden Ansprüche, **dadurch gekennzeichnet, dass** das zwischen dem radseitigen Trägerteil (3) und dem radseitigen Drehteil (21) befindliche Drehlager (43) und die zwischen dem radseitigen Drehteil (21) und dem achsseitigen Drehteil (23) befindliche gemeinsame Lagerstelle (31) an axial gegenüberliegenden Seiten des radseitigen Drehteils (21) positioniert sind.

7. Vorrichtung nach Anspruch 6, **dadurch gekennzeichnet, dass** das radseitige Drehteil (21) einen Zahnradabschnitt (47) aufweist, der in Axialrichtung betrachtet zwischen dem Trägerteil-Drehlager (43) und der gemeinsamen Lagerstelle (31) angeordnet ist, der Bestandteil eines das radseitige Drehteil (21) antreibenden Zahnradtriebs (30) ist.

8. Vorrichtung nach einem der vorhergehenden Ansprüche, **dadurch gekennzeichnet, dass** am achsseitigen Führungsteil (17) des Radträgers (1) zumindest ein Lenker (19) der Radaufhängung des Fahrzeugs anlenkbar ist, und dass das Führungsteil (17) über ein Drehlager (51) auf dem achsseitigen Drehteil (23) abstützbar ist.

9. Vorrichtung nach einem der vorhergehenden Ansprüche, **dadurch gekennzeichnet, dass** das achsseitige Führungsteil (17) radial außerhalb des achsseitigen Drehteils (23) angeordnet ist, und dass und dass insbesondere das achsseitige Führungsteil (17) über ein radial inneres Drehlager (51) auf dem achsseitigen Drehteils (23) abgestützt ist.

10. Vorrichtung nach einem der vorhergehenden Ansprüche, **dadurch gekennzeichnet, dass** der Radträger (1) zwischen dem Trägerteil (3) und dem Führungsteil (17) ein Drehmomentübertragungselement (61) aufweist, über das ein Drehmoment, insbesondere ein Bremsmoment, vom Trägerteil (3) zum Führungsteil (17) übertragbar ist, und zwar unter Überbrückung der achs- und radseitigen Drehteile (21, 23).

11. Vorrichtung nach einem der vorhergehenden Ansprüche, **dadurch gekennzeichnet, dass** zwischen dem radseitigen Trägerteil (3) und dem achsseitigen Führungsteil (17) eine Manschette (63) angeordnet ist, die die Drehteile (21, 23) und deren Lagerstellen schmutzdicht abdichtet, und dass insbesondere das Drehmomentübertragungselement (61) radial außerhalb einer umlaufenden Manschette (63) angeordnet ist.

## Claims

1. Device for adjusting the camber and/or track of a vehicle wheel (13) of a motor vehicle, having a wheel carrier (1) on which the vehicle wheel (13) is rotatably mounted in a wheel bearing (12), and a wheel-side support member (3), an axle-side guide part (17) and wheel and axle-side rotary members (21, 23) arranged in between, which are supported rotatably to each other at a common bearing point (31) about an axis of rotation (24), about which the wheel-side rotary member (21) for track or camber adjustment of the vehicle wheel (13) is pivotable about a wobble point (MP), wherein the wheel-side support member (3) has a brake calliper (15) that is coactive with a brake disc (11) of the vehicle wheel (13), **characterized in that** the wheel-side support member (3) is supported via a rotary bearing (43) on the wheel-side rotary member (21).

2. Device according to claim 1, **characterized in that** the wheel bearing (12) is designed to be demountable, with a radial inner bearing housing and a radial outer bearing housing that is demountable, for example, mounted by a press fit and/or screw connection, on an outer periphery of the wheel hub (5) or on an inner circumference of the rotary member (21), or that the wheel-side rotary member (21) directly forms the radially outer bearing housing of the wheel bearing (12), and that radially inwardly of, the outer bearing housing forming rotary member (21) a wheel hub portion (7) of, the vehicle wheel (13) bearing the wheel flange (5) is rotatably mounted.2.

3. Device according to claim 1 or 2, **characterized in that** the wheel bearing (12) is integrated in the wheel-side rotary member (21).

4. Device according to claim 1, 2 or 3, **characterized in that** in the wheel bearing (12) of the wheel carrier (1) a wheel hub portion (7) is rotatably mounted in one of the vehicle wheel (13) bearing wheel flanges (5).

5. Device according to one of the preceding claims, **characterized in that** the support member (3) is arranged radially outside of the wheel-side rotary member (21), and, in particular, that the support member (3) is supported via a radially inner rotary bearing (43) on the wheel-side rotary member (21).

6. Device according to one of the preceding claims, **characterized in that** between the wheel-side support member (3) and the wheel-side rotary member (21) sited rotary bearing (43) and between the wheel-side rotary member (21) and the axle-side rotary member (23) sited common bearing point (31) are positioned on axially opposite sides of the wheel-side rotary member (21).

7. Device according to claim 6, **characterized in that** the wheel-side rotary member (21) has a gear portion (47), viewed in the axial direction arranged between the support member rotary bearing (43) and the common bearing point (31), which is part of the wheel-side rotary member (21) driving gear drive (30).

8. Device according to one of the preceding claims, **characterized in that** on the axle-side guide part (17) of the wheel carrier (1) at least one link part (19) of the wheel suspension of the vehicle is linkable, and that the guide member (17) can be supported via a pivot bearing (51) on the axle-side rotary member (23).

9. Device according to one of the preceding claims, **characterized in that** the axle-side guide member (17) is arranged radially outside the axle-side rotary member (23), and that, and, in particular, the axle-side guide member (17) is supported via a radially inner rotary bearing (51) on the axle-side rotary member (23).

10. Device according to one of the preceding claims, **characterized in that** the wheel carrier (1) between the carrier part (3) and the guide part (17) has a torque transmission element (61) via which a torque, in particular, a braking torque is transferable from the carrier part (3) to the guide part (17), and this under bridging of the axle and wheel-side rotating parts (21, 23).

11. Device according to one of the preceding claims, **characterized in that** between the wheel-side support member (3) and the axle-side guide part (17) a collar (63) is arranged, which seals the rotary members (21, 23) and their bearings dirtproof, and that, in particular, the torque transmitting member (61) is disposed radially outward of a circumferential collar (63).

## Revendications

1. Dispositif de réglage du carrossage et/ou du pincement d'une roue de véhicule (13) d'un véhicule automobile, avec un support de roue (1), sur lequel la roue de véhicule (13) est logée rotative dans un palier de roue (12) et qui comporte une partie porteuse (3) côté roue, une partie de guidage (17) côté essieu ainsi que des pièces de rotation (21, 23) côté roue et côté essieu qui sont agencées entre lesdites parties et qui sont supportées au niveau d'un point d'appui commun (31) de manière à pouvoir tourner l'une par rapport à l'autre autour d'un axe de rotation (24) autour duquel la pièce de rotation (21) côté roue peut pivoter en vue du réglage de pincement ou de carrossage de la roue de véhicule (13) autour d'un point de basculement (MP), la partie porteuse (3) côté roue portant un étrier de frein (15) qui coopère avec un disque de frein (11) de la roue de véhicule (13), **caractérisé en ce que** la partie porteuse (3) côté roue est supportée sur la pièce de rotation (21) côté roue par l'intermédiaire d'un coussinet de pivotement (43).

2. Dispositif selon la revendication 1, **caractérisé en ce que** le palier de roue (12) est réalisé démontable, et ce avec un logement de palier intérieur et un logement de palier extérieur de façon radiale qui est démontable c'est-à-dire qui est monté par exemple par ajustage serré et/ou par vissage sur un pourtour extérieur du moyeu de roue (5) ou sur un pourtour intérieur de la pièce de rotation (21), ou **en ce que** la pièce de rotation (21) côté roue forme directement le logement de palier extérieur de façon radiale du palier de roue (12), et **en ce qu'**un tronçon de moyeu de roue (7) d'une bride de roue (5) portant la roue de véhicule (13) est logé rotatif de façon radiale à l'intérieur de la pièce de rotation (21) formant le logement de palier extérieur.2.

3. Dispositif selon la revendication 1 ou 2, **caractérisé en ce que** le palier de roue (12) est intégré dans la pièce de rotation (21) côté roue.

4. Dispositif selon la revendication 1, 2 ou 3, **caractérisé en ce qu'**un tronçon de moyeu de roue (7) d'une bride de roue (5) portant la roue de véhicule (13) est logé rotatif dans le palier de roue (12) du support de roue (1).

5. Dispositif selon l'une quelconque des revendications précédentes, **caractérisé en ce que** la partie porteuse (3) est agencée de façon radiale à l'extérieur de la pièce de rotation (21) côté roue, et **en ce que**, en particulier, la partie porteuse (3) est supportée sur la pièce de rotation (21) côté roue par l'intermédiaire d'un coussinet de pivotement (43) intérieur de façon radiale.

6. Dispositif selon l'une quelconque des revendications précédentes, **caractérisé en ce que** le coussinet de pivotement (43) situé entre la partie porteuse (3) côté roue et la pièce de rotation (21) côté roue ainsi que le point d'appui commun (31) situé entre la pièce de rotation (21) côté roue et la pièce de rotation (23) côté essieu sont placés au niveau de côtés de façon axiale opposés de la pièce de rotation (21) côté roue.

7. Dispositif selon la revendication 6, **caractérisé en ce que** la pièce de rotation (21) côté roue présente un tronçon de roue dentée (47) qui est agencé, considéré en direction axiale, entre le coussinet de pivotement (43) de partie porteuse et le point d'appui commun (31) et fait partie d'un engrenage à roue dentée (30) entraînant la pièce de rotation (21) côté roue.

8. Dispositif selon l'une quelconque des revendications précédentes, **caractérisé en ce qu'**au moins un bras (19) de la suspension de roue du véhicule peut être articulé sur la partie de guidage (17) côté essieu du support de roue (1), et **en ce que** la partie de guidage (17) peut être supportée sur la pièce de rotation (23) côté essieu par l'intermédiaire d'un coussinet de pivotement (51).

9. Dispositif selon l'une quelconque des revendications précédentes, **caractérisé en ce que** la partie de guidage (17) côté essieu est agencée de façon radiale à l'extérieur de la pièce de rotation (23) côté essieu, et **en ce que**, en particulier, la pièce de guidage (17) côté essieu est supportée sur la pièce de rotation (23) côté essieu par l'intermédiaire d'un coussinet de pivotement (51) intérieur de façon radiale.

10. Dispositif selon l'une quelconque des revendications précédentes, **caractérisé en ce que** le support de roue (1) comporte entre la partie porteuse (3) et la partie de guidage (17) un élément de transmission de couple (61) par l'intermédiaire duquel un couple, en particulier un couple de freinage, peut être transmis de la partie porteuse (3) à la partie de guidage (17), et ce en contournant les pièces de rotation (21, 23) côté essieu et côté roue.

11. Dispositif selon l'une quelconque des revendications précédentes, **caractérisé en ce qu'**une manchette (63) est agencée entre la partie porteuse (3) côté roue et la partie de guidage (17) côté essieu, laquelle manchette rend les pièces de rotation (21, 23) et leurs points d'appui étanches aux poussières, et **en ce que**, en particulier, l'élément de transmission de couple (61) est agencé de façon radiale à l'extérieur d'une manchette (63) circulaire.
